# EUROPEAN PATENT APPLICATION

(11) **EP 2 830 276 A1**
(43) Date of publication of application: **28.01.2015**
(21) Application number: 13849792.0
(22) Date of filing: 06.09.2013
(51) Int. Cl.: H04L 29/06, G06F 17/30

(54) **METHOD AND DEVICE FOR COMBINING MOBILE TERMINAL READING AND SOCIAL NETWORK**

(30) Priority: 23.10.2012 CN 201210406286
(71) Applicant: ZTE Corporation, Shenzhen, Guangdong 518057 (CN)
(72) Inventor: LI, Chuanjiu, Shenzhen Guangdong 518057 (CN)
(74) Representative: Portch, Daniel
(86) International application number: PCT/CN2013/083065
(87) International publication number: WO 2014/063535

(57) **Abstract**

A method and device for combining mobile terminal reading and a social network. The method comprises: establishing a network connection between a mobile terminal and a social network; a reading portal of the mobile terminal recording reading-related behavior information, and posting the behavior information to a social platform in the social network, wherein the behavior information comprises dynamic link data; and accessing to the reading portal of the mobile terminal via the dynamic link displayed on the social platform.

## Description

### FIELD OF THE INVENTION

The present invention relates to communication technologies, and more particularly, to a method and device for combining a mobile terminal reading and a social network.

### BACKGROUND OF THE INVENTION

With the diversified development of mobile Internet and mobile applications, mobile reading industry chain is more open, and the content providers gradually form an industry chain led by themselves through the diversified development of cooperation modes. High technologies that take the Internet information technology and digital technology as the primaries develop rapidly, and cultural content propagation based on new medias such as Internet and mobile phones becomes the mainstream. The way people reads and accesses knowledge and information, and even their lifestyle, have experienced a disruptive change, not only the cultural transmission method changes, but also the cultural creation mode is experiencing fundamental change. The Internet era emphasizes the personality development-centric feature, and the public are no longer the passive recipients of information, they use their own means to participate in the information dissemination, and play the role of interactive participation, thus forming new needs and new market in the process, and the join-in of the social network provides the public with a platform for real-time interacting, communicating and exchanging.

In the field of mobile terminal reading service, especially in the mobile reading, the number of users is increasing daily, people also has higher and updated requirements on the combination of mobile reading and social networking service, and the combination of the current mobile reading and social networking service is poor, the implementable interaction method is unitary, and the user experience is poor.

### SUMMARY OF THE INVENTION

In order to solve the problem that the combination of mobile terminal reading and a social network is poor in the related art, the embodiment of the present invention provides a method and device for combining a mobile terminal reading and a social network.

The embodiment of the present invention provides a method for combining a mobile terminal reading and a social network, comprising: establishing a network connection between a mobile terminal and a social network; a reading portal of said mobile terminal recording a reading-related behavior information, and posting said behavior information to a social platform in said social network, wherein said behavior information comprises dynamic link data; and accessing to said reading portal of said mobile terminal through a dynamic link displayed on said social platform.

Alternatively, said behavior information is one or more of the following items: commenting on books, recommending books to friends, gifting books to friends, sending flowers to books, throwing eggs to books, sharing books to a third party website, collecting books and ordering books.

Alternatively, said social platform provides user point management and/or user growth management; said user point management is to reward points to the user's reading-related behavior at said reading portal and the user's related behavior on said social platform; said user growth management is to assign a behavior permission corresponding to the user experience at the reading portal and a behavior permission corresponding to the user experience on the social platform in accordance with the user experience in a predetermined period of time.

Wherein, said mobile terminal and said social network are connected through a representational state transfer (REST) interface.

Alternatively, said dynamic link data is managed with a connection pool.

The embodiment of the present invention further provides a device for combining a mobile terminal reading and a social network, comprising: a network establishment processing module, configured to: establish a network connection between said mobile terminal and said social network; an information synchronization processing module, configured to: make a reading portal of said mobile terminal record a reading-related behavior information, and post said behavior information to a social platform in said social network, wherein, said behavior information comprises dynamic link data; and a portal skip processing module, configured to: access to said reading portal of said mobile terminal through a dynamic link displayed on said social platform.

Alternatively, said behavior information is one or more behaviors of the following items: commenting on books, recommending books to friends, gifting books to friends, sending flowers to books, throwing eggs to books, sharing books to a third party website, collecting books and ordering books.

Alternatively, said information synchronization processing module is further configured to: provide user point management and/or user growth management for said social network platform, wherein, said user point management is to reward points to the user's reading-related behavior at said reading portal and to the user's related behavior on said social platform; said user growth management is to assign a behavior permission corresponding to the user experience at the reading portal and a behavior permission corresponding to the user experience on said social platform in accordance with the user experience in a predetermined period of time.

Alternatively, said network establishment processing module is configured to establish a network connection between said mobile terminal and said social network in the following manner: executing a network connection between said mobile terminal and said social network via a representational state transfer (REST) interface.

Alternatively, said dynamic link data is managed with a connection pool.

The reading portal in accordance with the embodiment of the present invention connects with the social networking system by calling a unified interface provided by said social network, and synchronously shows the user operational behavior on books at the reading portal on said social platform, shares it with other users, and provides the relevant book link. In the personal dynamic information column, the social user can not only browse the synchronization information, but can also skip to the reading portal through said book link to read information such as book details page, so as to achieve the free interaction and combination of readings and social events.

At the reading portal end, users can perform operations such as commenting on, sharing, sending flower to, throwing eggs to, collecting, recommending, gifting, and ordering books, and such operation information is synchronized to the social platform, to promote the users on said social platform to perform activities such as adding persons who publish information to friends, commenting on and interacting with friends, so as to enhance the user experience in many ways and to achieve a high degree of combination of reading and social interaction.

At the social platform end, for the dynamic information from the reading portal, providing users with auxiliary management functions such as points reward and experience growth can improve the user stickiness, gather the activity degree of said reading portal and said social network, and increase the service amount of mobile communications.

Using the REST architecture and providing a unified REST interface can reduce the possibility of the inconsistencies between the data at the client end and the data the server end and improve the system reliability; the network efficiency is improved by sharing the connection pool.

### BRIEF DESCRIPTION OF THE DRAWINGS

FIG. 1 is a flow chart of a method for combining a mobile terminal reading and a social network in accordance with an embodiment of the present invention.
FIG. 2 is a schematic diagram of a user operational behavior on a resource page of the reading portal in accordance with an embodiment of the present invention.
FIG. 3 is a schematic diagram of a social architecture provided by a social platform in accordance with an embodiment of the present invention.
FIG. 4 is a schematic diagram of a networking structure in accordance with an embodiment of the present invention.
FIG. 5 is a structural diagram of a device for combining a mobile terminal reading and a social network in accordance with an embodiment of the present invention.

### PREFERRED EMBODIMENTS OF THE PRESENT INVENTION

Hereinafter, with combination of the accompanying drawings, the embodiments of the present invention will be described in detail. It should be understood that in the case of no conflict, the embodiments and features in the embodiments of the present application may be arbitrarily combined with each other.

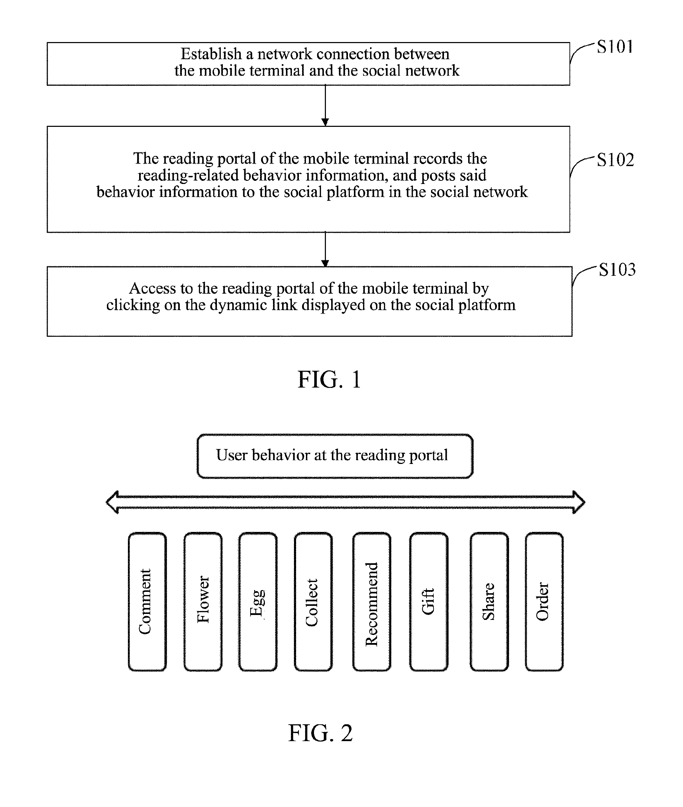

FIG. 1 shows a flow chart of a method for combining the mobile terminal reading and the social network in accordance with the embodiment of the present invention, comprising the following steps.

Step S101, establish a network connection between the mobile terminal and the social network.

Step S102, the reading portal of the mobile terminal records the reading-related behavior information, and posts said behavior information to a social platform such as the SNS (Social Networking Services) community in the social network, and said behavior information comprises the dynamic link data.

Step S103, access to the reading portal of said mobile terminal by clicking on the dynamic link displayed on the social platform.

With the abovementioned steps, the reading portal of said mobile terminal and the social platform in said social network form a unified architecture, and open to said reading portal to call via the REST interface provided in said social network, thus reducing the inconsistency between the data at the client end and the data at the server, and improving the system reliability. The reading portal transmits the reading progress of a user on a book to the social platform to display by calling the defined REST interface, and when other users read about the book's publication information, they can share, forward and recommend said information.

Meanwhile, the reading portal can also send said book's Uniform Resource Locator (URL) link through the REST interface to the social platform to display, and other users can reversely jump back into the reading portal by clicking on the URL link to conduct an interaction such as looking up book resources, so as to achieve a two-way interoperability between said mobile terminal and said social network.

At the mobile terminal side, the user has a variety of behaviors related with reading books at the reading portal, comprising performing operations such as commenting on, sharing, sending flowers to, throwing eggs to, collecting, recommending, gifting and ordering books on the book resource page as shown in FIG. 2. It comprises not only those operations listed here, but also the unlisted operations, for example, relevant behaviors such as responding to the comments, these operations are simultaneously released on the social platform, so as to interact with other user friends, to form a high degree of combination of the mobile terminal and the social network. Hereinafter, the method for achieving the abovementioned combination will be described in detail.

About commenting: on the reading portal, the user comments on a book on its resource details page, the comment information is synchronized to the user's personal center in the social network, and the user's comment information on the book is displayed in the personal center. User friends click on the book name in the comment information to access to the book's resource details page at the reading portal, and can perform operations such as commenting on, sharing, sending flowers, throwing eggs, collecting, recommending, gifting, and ordering the book on the resource page, so as to form an interaction between the reading portal and the user. Within the system of the social platform, it can add the comment information publisher as a friend, and reply his/her comment content, so as to form the interaction within said social platform.

About recommending: at the reading portal, the user recommends the book to his/her friend on a book resource page, and synchronizes the recommendation information in real-time to the personal center in said social network, and displays the information of said book recommended by the user in said personal center. The user friend can click on the book name in the recommendation information to access to the book's resource details page at the reading portal, and performs operations such as commenting on, sharing, sending flowers to, throwing eggs to, collecting, recommending, gifting, and ordering said book on the resource page, so as to form the interaction between the reading portal and other users. Herein, the book recommendation information can also be notified to his/her friend via the SMS or E-mail, and the friends can interact with each other by accessing to the reading portal and the social platform through these third-party platforms.

About gifting: at the reading portal, the user gifts the book to a friend in said book's resource page, the gifting information is synchronized in real-time to the personal center in the social network, and the user gifting book information is displayed in the personal center. The user friend can click on the book name in the gifting information to access to the resource details page of said book at the reading portal, and interact with the user at the reading portal; gifting books is similar to recommending books, and the system notifies to the friend via the SMS or E-mail, and the friend access to the reading portal and the social platform through a third party.

About sending flowers and throwing eggs: at the reading portal, the user sends flowers (that is, gives a positive feedback) or throws eggs (that is, gives a negative feedback) to a certain book on said book's resource page, sending flowers or throwing eggs information is real-time synchronized to the personal center in said social network, and the information of the user sending flowers or throwing eggs to the book is displayed in the personal center. The user friend can click on the book name in the flower/egg information to access to said book's resource details page at the reading portal, and interact with the user at the reading portal.

About sharing: at the reading portal, the user shares his/her reading experience or content to a personal blog on said book's resource page, the information of this sharing operation is synchronized in real-time to the personal center in said social network, and displays the user sharing book information in the personal center. The user friends on the social platform can click on the book name in the sharing information to access to said book's resource details page at the reading portal, and interact with the user at the reading portal.

About ordering: at the reading portal, the user orders a book on said book's resource page, and the ordering information is real-time synchronized to the personal center in said social network, and displays the user's book ordering information in said personal center. The user friend can click on the book name in the ordering information to access to the book's resource details page at the reading portal, and interact with the user at the reading portal. Moreover, since the ordering information is the user's real purchase behavior information, representing the book existence value, which is more likely to cause other users to concern, and easier to upgrade the activity degree of the interaction.

About collecting: at the reading portal, when the user collects a book on said book's resource page, the collection information is real-time synchronized to the personal center in the social network, and the user' book collection information is displayed in the personal center. The user friend can click on the book name in the collection information to access to the book's resource details page at the reading portal, and interact with the user on the reading portal.

In regard of the technology, a REST interface for transmitting the synchronization data is provided for the reading portal in the social network, said reading portal calls said interface, sends the synchronization information such as the comment content, the recommendation information and the ordering information to said social platform to dynamically display, meanwhile the book name as well as the book's URL link are transmitted together, for the friends to click, so as to interact. Herein, the URL link is managed by sharing the connection pool, so as to improve the network efficiency.

In order to improve the combination of the mobile terminal and the social network, it can further provide the following various function services.

At the mobile terminal side, in addition to providing users with the display of book files such as books, magazines, comic books, and audio books, the reading portal also performs operations such as commenting on, up or down, recommending, sharing, collecting, and ordering the books, and it further provides the following function operations:
common functions: registration and log-in, column navigation, interface display, thematic area activities, monthly prefecture, book classification, search, hot words, ranking, classification recommendation, similar recommendation, site recommendation, book introduction, book catalogs, free to read, famous author recommendation, and audio book downloads.

Personal backpack function: personal monthly, pay-per-order, personal books, chapter payments, reading history, personal bookmarks, personal collections, and update reminders.

Category ranking function: click ranking, order ranking, comment ranking, collecting ranking, recommendation ranking, searching ranking, and so on.

User process function: automatic registration and login, manual registration and login, communication account ordering, binding a third-party account to order, and service unsubscribing function.

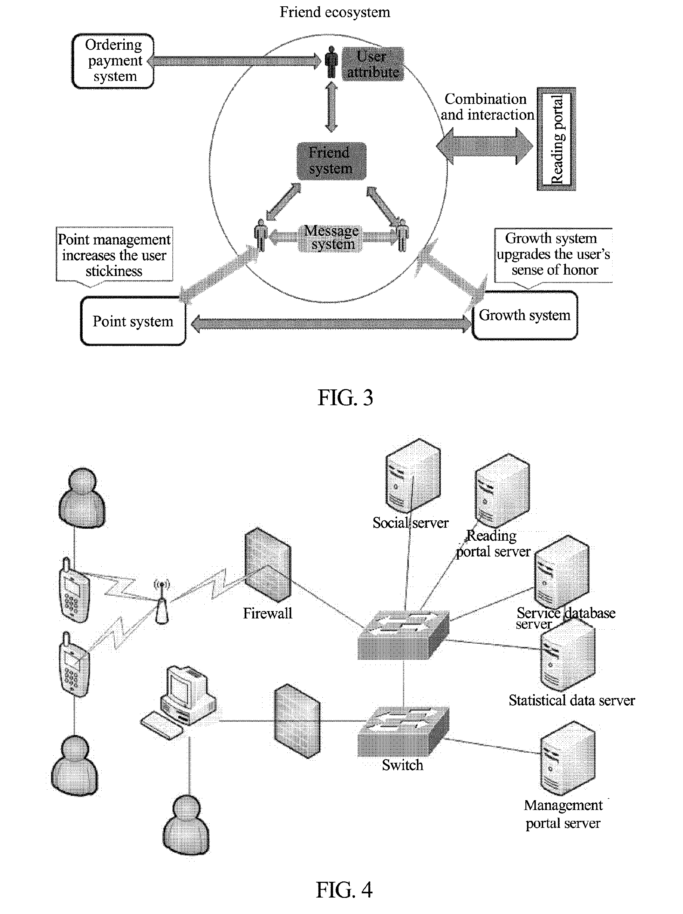

At the social network side, the social platform mainly provides the user with the scenario of social network, and the user can create the user's "Friend ecosystem" through a platform, as shown in FIG. 3, and achieves the following functions on the platform interface: user's basic information maintenance, friend interaction and management, growth management, payment management, rewards management, and consumption management.

Said user's basic information maintenance: user name maintenance and password management, head portrait and label customization, and providing maintenance and management of information such as age, birthday, astrology, and place of residence.

Said friend interaction and management: finding friends, fans function, adding to follow, message in Website, dynamic information display, recommending and gifting books to friends, and accessing to friend's space.

Said rewards management: rewarding points for user's reading behavior at the reading portal and the related behavior in the community. For example, for user's operations, such as commenting on, sharing, sending flowers to, throwing eggs to, collecting, recommending, gifting and ordering books, that are posted at the reading portal, prompting the corresponding reward points when synchronizing to the social platform, and rewarding the corresponding points on the social platform, and integrating it into the user's reward information system.

Said growth management: granting a rank permission based on the experience value obtained by the user, and enjoying the right of the corresponding rank; and awarding medals based on said user's behavior, so as to meet said user's sense of accomplishment.

Said payment management: providing the user with reward redemption and transfer functions.

Said consumption management: providing the information record of the user's consumptions such as redeeming and ordering books, and point transfer.

The enriched interactive activities of the mobile terminal and the social network can be achieved via the abovementioned functions, for example, during the point redeeming interaction, the user comments on, shares, sends flowers to, throws eggs to, collects, recommends, gifts, and orders books at the reading portal, when synchronizing to the social platform, the social platform rewards accordingly with the corresponding points; the user can use a certain number of points to redeem the book volumes or books at the reading portal, thus forming a good interaction with high degree of combination, improving the user experience, and increasing the user stickiness.

In the networking realization and hardware deployment, the embodiment of the present invention can use the networking structure shown in FIG. 4, the hardware needed in the entire system comprises social server, reading portal server, service database server, statistical database server, management portal server, switch, firewall, and the like. The administrator uses the computer to directly operate the management portal through the firewall and the layer 3 switch, so as to achieve management operations such as content upload, content command, content management, and release. The management portal server directly communicates with the reading portal server and the service database server through the switch in the LAN. The user connects to the network via a wireless base station through a handheld reading portal, and access to the reading portal server or the social server to implement reading or other social activities through the firewall and the layer 3 switch. The reading portal server, the social server, the service data server and the statistical data server communicate in the LAN.

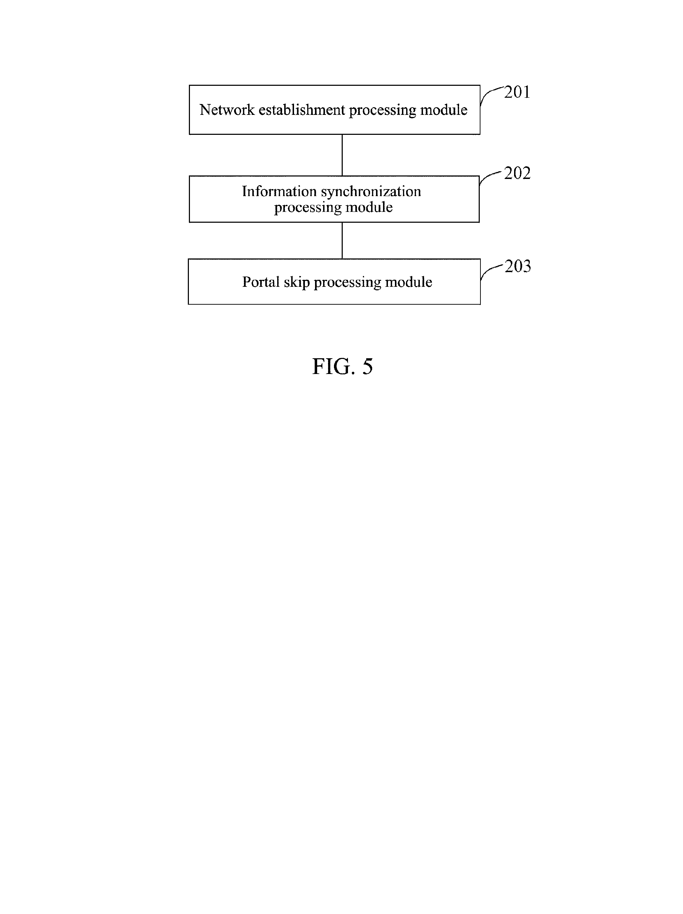

In addition, in order to solve the problem of the low degree of combination of the mobile terminal reading and the social network in the related art, the embodiment of the present invention further provides a device for combining the mobile terminal reading and the social network, as shown in FIG. 5, comprising: network establishment processing module 201, which is used to establish a network connection between the mobile terminal and the social network; information synchronization processing module 202, which is used to make the reading portal of said mobile terminal record the reading-related behavior information and post said behavior information on the social platform in the social network, wherein, said behavior information comprises the dynamic link data; as well as, portal skip processing module 203, which is used to access to the reading portal of said mobile terminal through the dynamic link displayed on said social platform.

With the scheme in the embodiment of the present invention, the user clicks to view a friend in the personal center on the social platform, accesses to the friend's personal center, and according to the friend's reading, ordering, and sharing records and other information, then clicks on the URL of the book of interest, accesses to the reading portal, and forms an interaction between the social system and the reading portal, overall, it achieves using the interaction within the social network to drive the interaction of the high degree of combination of the social network and the reading portal.

Obviously, those skilled in the art should understand that, each abovementioned module or step of the present invention can be achieved with a general-purpose computing device, and they can be integrated on a single computing device or distributed in a network composed of a plurality of computing devices, alternatively, they may be implemented with program codes executable by a computing device, so that they can be stored in a storage means and executed by a computing device, moreover in some cases, the steps shown or described herein may be processed in a order different from what is shown here, or they are made into separate integrated circuit modules, or some of the modules or steps can be made into a single integrated circuit module to implement. Thus, the present invention is not limited to any specific combination of hardware and software.

The above description is only preferred embodiments of the present invention and not intended to limit the present invention, and a person in the field can understand that all kinds of improvements, enhancements and replacements are possible, therefore within the spirit and essence of the present invention, all these improvements, enhancements and replacements should be included within the scope of the appended claims of the present invention.

### Industrial Applicability

The method and device in the embodiments of the present invention can be used to achieve the free interaction and combination of the readings and social events, so as to improve the user experience; increasing the user stickiness, increasing the mobile communication service amount, reducing the possibility of the inconsistency between the data at the client end and the data at the server, and improving the system reliability; and the network efficiency is improved by sharing the connection pool.

## Claims

1. A method for combining a mobile terminal reading and a social network, comprising:
establishing a network connection between a mobile terminal and a social network;
a reading portal of said mobile terminal recording a reading-related behavior information, and posting said behavior information to a social platform in said social network, wherein said behavior information comprises dynamic link data; and
accessing to said reading portal of said mobile terminal through a dynamic link displayed on said social platform.

2. The method of claim 1, wherein,
said behavior information is one or more of the following items: commenting on books, recommending books to friends, gifting books to friends, sending flowers to books, throwing eggs to books, sharing books to a third party website, collecting books and ordering books.

3. The method of claim 1, wherein,
said social platform provides user point management and/or user growth management; said user point management is to reward points to said user's reading-related behavior at said reading portal and said user's related behavior on said social platform; said user growth management is to assign a behavior permission corresponding to user experience at said reading portal and a behavior permission corresponding to the user experience on said social platform in accordance with the user experience in a predetermined period of time.

4. The method of any one of claims 1-3, wherein,
said mobile terminal and said social network are connected through a representational state transfer (REST) interface.

5. The method of claim 4, wherein,
said dynamic link data is managed with a connection pool.

6. A device for combining a mobile terminal reading and a social network, comprising:
a network establishment processing module, configured to: establish a network connection between said mobile terminal and said social network;
an information synchronization processing module, configured to: make a reading portal of said mobile terminal record a reading-related behavior information, and post said behavior information to a social platform in said social network, wherein, said behavior information comprises dynamic link data; and
a portal skip processing module, configured to: access to said reading portal of said mobile terminal through a dynamic link displayed on said social platform.

7. The device of claim 6, wherein,
said behavior information is one or more behaviors of the following items: commenting on books, recommending books to friends, gifting books to friends, sending flowers to books, throwing eggs to books, sharing books to a third party website, collecting books and ordering books.

8. The device of claim 6, wherein,
said information synchronization processing module is further configured to: provide user point management and/or user growth management for said social network platform, wherein, said user point management is to reward points to the user's reading-related behavior at said reading portal and to said user's related behavior on said social platform; said user growth management is to assign a behavior permission corresponding to the user experience at said reading portal and a behavior permission corresponding to the user experience on said social platform in accordance with the user experience in a predetermined period of time.

9. The device of any one of claims 6-8, wherein,
said network establishment processing module is configured to establish a network connection between said mobile terminal and said social network in the following manner:
executing a network connection between said mobile terminal and said social network via a representational state transfer (REST) interface.

10. The device of claim 9, wherein,
said dynamic link data is managed with a connection pool.
